# EUROPÄISCHE PATENTANMELDUNG

(11) **EP 2 698 533 A1**
(43) Veröffentlichungstag der Anmeldung: **19.02.2014**
(21) Anmeldenummer: 12180761.4
(22) Anmeldetag: 17.08.2012
(51) Int. Cl.: F03D 7/02

(54) **Elektrisch-hydraulischer Pitchantrieb, Wind- oder Wasserenergieanlage und Verfahren zum Betrieb eines elektrisch-hydraulischen Pitchantriebs**

(71) Anmelder: Moog Unna GmbH, 59423 Unna (DE)
(72) Erfinder: Lehmann, Felix Johan, 59174 Kamen (DE)

(57) **Zusammenfassung**

Beschrieben und dargestellt ist einen Elektrisch-hydraulischer Pitchantrieb für ein Rotorblatt (17), wobei das Rotorblatt (17) an der Rotornabe (18) eines Rotors (19) angeordnet ist, das Rotorblatt (17) um seine Längsachse drehbar ist, dem Rotorblatt (17) wenigstens ein elektrischer Pitchmotor (20) zugeordnet ist und das Rotorblatt (17) durch den einen oder die mehreren zugeordneten elektrischen Pitchmotoren (20) um seine Längsachse drehbar ist.

Ein Elektrisch-hydraulischer Pitchantrieb, der besonders robust und kostengünstig ist, wird erfindungsgemäß dadurch realisiert, dass das Rotorblatt (17) einen hydraulischen Pitchantrieb (1) aufweist, wobei die Kraft von dem hydraulischen Pitchantrieb (1) auf das Rotorblatt (17) mechanisch unabhängig von der Kraft von dem elektrischen Pitchmotor (20) auf das Rotorblatt (17) übertragbar ist.

Beschrieben und dargestellt ist eine Wind- oder Wasserenergieanlage mit einem Rotor (19), wobei der Rotor (19) eine Rotornabe (18) und wenigstens ein Rotorblatt (17) aufweist, wobei das eine oder die mehreren Rotorblätter (17) drehbar um ihre jeweilige Längsachse an der Rotornabe (18) angeordnet sind.

Eine Wind- oder Wasserenergieanlage, die besonders sicher zu betreiben ist, wird erfindungsgemäß dadurch realisiert, dass das eine oder wenigstens eines der mehreren Rotorblätter (17) einen elektrisch-hydraulischen Pitchantrieb nach einem der Ansprüche 1 bis 8 aufweist.

Beschrieben und dargestellt ist ein Verfahren zum Betrieb eines elektrisch-hydraulischen Pitchantriebs für ein Rotorblatt (17), wobei das Rotorblatt (17) an der Rotornabe (18) eines Rotors (19) angeordnet ist, das Rotorblatt (17) um seine Längsachse drehbar ist, dem Rotorblatt (17) wenigstens ein elektrischer Pitchmotor (20) zugeordnet ist und das Rotorblatt (17) durch den einen oder die mehreren zugeordneten elektrischen Pitchmotoren (20) um seine Längsachse drehbar ist.

Ein Verfahren zum Betrieb eines elektrisch-hydraulischen Pitchantriebs, das besonders robust und kostengünstig ist, wird erfindungsgemäß dadurch realisiert, dass das Rotorblatt (17) einen hydraulischen Pitchantrieb (1) aufweist, wobei die Kraft von dem hydraulischen Pitchantrieb (1) auf das Rotorblatt (17) mechanisch unabhängig von der Kraft von dem elektrischen Pitchmotor (20) auf das Rotorblatt (17) übertragen wird.

## Beschreibung

Die Erfindung betrifft einen elektrisch-hydraulischen Pitchantrieb für ein Rotorblatt, wobei das Rotorblatt an der Rotornabe eines Rotors angeordnet ist, das Rotorblatt um seine Längsachse drehbar ist, dem Rotorblatt wenigstens ein elektrischer Pitchmotor zugeordnet ist und das Rotorblatt durch den einen oder die mehreren zugeordneten elektrischen Pitchmotoren um seine Längsachse drehbar ist.

Der Rotor an dessen Rotornabe das Rotorblatt angeordnet ist, kann z. B. der Rotor einer Windenergieanlage oder einer Wasserenergieanlage sein. Bei modernen Windenergieanlagen sind die Rotorblätter in der Regel um ihre Längsachsen drehverstellbar ausgebildet. Hierdurch lässt sich durch Einstellung des als Pitchwinkel bezeichneten Drehwinkels der Rotorblätter um ihre Längsachsen die Energieaufnahme aus dem Wind verändern. Zur Einstellung des Pitchwinkels wird ein Pitchsystem verwendet, welches je Rotorblatt einen Pitchantrieb aufweist. Der jeweilige Pitchantrieb eines Rotorblatts vermag das entsprechende Rotorblatt um seine Längsachse zu drehen.

Durch Rotation der Rotorblätter um ihre jeweilige Längsachse regeln Pitchsysteme die Stellung der Rotorblätter zum Wind und sind häufig die einzige sichere Möglichkeit den Rotor einer Windenergieanlage zum Stillstand zu bringen. Dies geschieht dadurch, dass das Pitchsystem die Rotorblätter in die so genannte Fahnenstellung dreht. In der Fahnenstellung nehmen die Rotorblätter keine Energie mehr aus dem Wind auf. Vielmehr wird der sich drehende Rotor durch den Luftwiderstand der Rotorblätter aerodynamisch gebremst. Folglich kommt der Rotor mangels Antrieb durch den Wind und aufgrund der aerodynamischen Bremsung durch die Rotorblätter nach gewisser Zeit zum Stillstand. Die Energieversorgung des Pitchsystems erfolgt üblicherweise durch das Netz, in das die Windenergieanlage auch die erzeugte Energie einspeist. Windenergieanlagen weisen in der Regel wenigstens zwei Rotorblätter auf. Windenergieanlagen mit nur einem Rotorblatt sind aus dem Stand der Technik ebenfalls bekannt, haben aber keine praktische Bedeutung, da die durch die zwangsläufige Asymmetrie des Rotors bedingten Nachteile eine Durchsetzung dieses Rotorkonzeptes bisher verhinderten. Am weitaus häufigsten finden daher Rotoren mit drei Rotorblättern Verwendung.

Aus dem Stand der Technik sind eine Vielzahl an Pitchantrieben bekannt, die in der Regel entweder elektrisch oder hydraulisch ausgebildet sind, d. h. dass die krafterzeugende Einrichtung des Pitchantriebs durch einen Elektromotor bzw. ein hydraulisches Stellorgan gebildet wird. Ihrer Funktion entsprechend werden die in Pitchantrieben eingesetzten Elektromotoren häufig als Pitchmotoren bezeichnet. Um auch bei einem Netzausfall die Rotorblätter in die Fahnenstellung drehen zu können werden Notenergiespeicher, insbesondere Akkumulatoren und Kondensatoren, verwendet, die bei vorhandenem Netz geladen werden und bei Netzausfall die Energie zum Betreiben der Pitchantriebe bereitstellen. Bei hydraulischen Pitchantrieben werden hierzu in der Regel Druckspeicher verwendet, in denen Hydraulikfluid unter hohem Druck gespeichert wird. Bei einem Netzausfall können die Druckspeicher die notwendige Energie zum Betrieb der hydraulischen Pitchantriebe bereitstellen.

Aus der DE 20017994 U1 ist ein Pitchantrieb für Windkraftanlagen mit einer hybriden Ausführung bekannt, d. h. mit elektrischer und hydraulischer Ausführung in Kombination. Neben einem Elektromotor kommt hierbei pro Rotorblatt noch ein Hydraulikmotor (Schnelllaufender Hydraulikmotor, z. B. Zahnradmotor) mit zugehörigem Hydraulik-Aggregat zum Einsatz, der bei Ausfall der Versorgungsspannung für die E-Motoren oder bei Not-Aus das Rotorblatt in die sogenannte Fahnenstellung, d. h. aus dem Wind, dreht und dadurch die aerodynamische Bremsung bewirkt. Der Hydraulikmotor kann dabei entweder in Reihe mit dem E-Motor auf einer Welle arbeiten oder an einer separaten Antriebswelle des Planetengetriebes. Im Normalbetrieb der WKA wird der Hydraulikmotor nur passiv mitgeführt und fördert das Öl im Hydraulikkreislauf drucklos um.

Die Kraftübertragung von dem elektrischen Pitchmotor auf das Rotorblatt erfolgt im Stand der Technik in der Regel über ein Getriebe, welches ein Zahnrad antreibt. Das Zahnrad greift hierbei in einen an dem Blatt, insbesondere an der Innenseite der Blattwurzel, angeordneten Zahnkranz ein. Da das Getriebe, das Zahnrad und der Zahnkranz starken und oft wechselnden Kräften ausgeliefert sind, bilden diese drei kraftübertragenden Komponenten eine Schwachstelle des elektrischen Pitchantriebs. Insbesondere die Zähne des Zahnkranzes und des Zahnrads sind anfällig für Materialermüdung. Besonders hoch sind die Belastungen bei einer Notfahrt der Rotorblätter in die Fahnenstellung, da hierbei eine sehr hohe Verstellgeschwindigkeit der Rotorblätter erwünscht ist, um den Rotor schnell zum Stillsand zu bringen, und folglich der elektrische Pitchmotor mit maximaler Leistung betrieben wird.

Die Erfindung betrifft ferner eine Wind- oder Wasserenergieanlage mit einem Rotor, wobei der Rotor eine Rotornabe und wenigstens ein Rotorblatt aufweist, wobei das eine oder die mehreren Rotorblätter drehbar um ihre jeweilige Längsachse an der Rotornabe angeordnet sind.

Die Erfindung betrifft ferner ein Verfahren zum Betrieb eines Pitchantriebs für ein Rotorblatt, wobei das Rotorblatt an der Rotornabe eines Rotors angeordnet ist, das Rotorblatt um seine Längsachse drehbar ist, dem Rotorblatt wenigstens ein elektrischer Pitchmotor zugeordnet ist und das Rotorblatt durch den einen oder die mehreren zugeordneten elektrischen Pitchmotoren um seine Längsachse drehbar ist.

Damit ist es die Aufgabe der Erfindung, einen elektrisch-hydraulischen Pitchantrieb und eine Wind- oder Wasserenergieanlage anzugeben, die besonders robust und kostengünstig sind, sowie ein Verfahren zum Betrieb eines elektrisch-hydraulischen Pitchantriebs anzugeben, das besonders robust und kostengünstig ist.

Die zuvor hergeleitete und aufgezeigte Aufgabe ist ausgehend von dem eingangs beschriebenen elektrisch-hydraulischen Pitchantrieb dadurch gelöst, dass das Rotorblatt einen hydraulischen Pitchantrieb aufweist, wobei die Kraft von dem hydraulischen Pitchantrieb auf das Rotorblatt mechanisch unabhängig von der Kraft von dem elektrischen Pitchmotor auf das Rotorblatt übertragbar ist.

Erfindungsgemäß weist der elektrisch-hydraulische Pitchantrieb somit sowohl einen elektrischen Pitchantrieb, der wenigstens einen elektrischen Pitchmotor aufweist, als auch einen hydraulischen Pitchantrieb auf. Der elektrische Pitchantrieb kann neben dem elektrischen Pitchmotor auch weitere Komponenten umfassen, wie z. B. Notenergiespeicher, insbesondere Akkumulatoren oder sogenannte Ultra-Caps, ein Getriebe, Steuerungselektronik und Sensorik. Die Kraftübertragung von dem elektrischen Pitchmotor auf das Rotorblatt kann z. B., wie aus dem Stand der Technik bekannt, über ein Getriebe erfolgen, welches ein Zahnrad antreibt. Das Zahnrad greift hierbei in einen an dem Blatt, insbesondere an der Innenseite der Blattwurzel, angeordneten Zahnkranz ein. Zur Schonung des Zahnrads, des Zahnkranzes und gegebenenfalls des Getriebes erfolgt erfindungsgemäß die Kraftübertragung von dem hydraulischen Pitchantrieb auf das Rotorblatt mechanisch unabhängig von der Kraftübertragung von dem elektrischen Pitchmotor auf das Rotorblatt. Dies bedeutet, dass die Kraft die durch den hydraulischen Pitchantrieb aufgebracht wird nicht über die Zähne des Zahnkranzes, das Zahnrad und ggf. das Getriebe auf das Rotorblatt übertragen wird, sondern an einer anderen Stelle in das Rotorblatt eingeleitet wird. Dies kann insbesondere dadurch erreicht werden, dass der hydraulische Pitchantrieb mittels eines Gelenks, insbesondere eines Drehgelenks, an dem Rotorblatt angreift. Vorzugsweise weist der hydraulische Pitchantrieb hierzu ein Stellorgan auf, welches insbesondere als Hydraulikzylinder ausgebildet sein kann, wobei der Hydraulikzylinder eine Zylinderkolbenstange aufweist, an dem freien Ende der Zylinderkolbenstange ein Gelenk angeordnet ist und das Gelenk an dem Rotorblatt angreift. Durch eine Bewegung des Zylinderkolbens und somit auch der Zylinderkolbenstange kann eine Kraft auf das Rotorblatt übertragen werden, die das Rotorblatt in die Fahnenstellung dreht.

Gemäß einer vorteilhaften Weiterbildung der Erfindung ist vorgesehen, dass der hydraulische Pitchantrieb ein Stellorgan, einen Druckspeicher, eine Motor-/Pumpenvorrichtung, eine Schaltventilanordnung und ein Fluidreservoir aufweist, wobei das Stellorgan eine erste Kammer aufweist und das Rotorblatt durch das Stellorgan um seine Längsachse drehbar ist, die Motorpumpenvorrichtung zum Pumpen von Fluid aus dem Fluidreservoir in den Druckspeicher mit einem ersten Anschluss an das Fluidreservoir angeschlossen ist und mit einem zweiten Anschluss an den Druckspeicher angeschlossen ist, über die Schaltventilanordnung im Störungszustand ein Fluidfluss aus dem Druckspeicher in die erste Kammer des Stellorgans einstellbar ist und über die Schaltventilanordnung im Freilaufzustand ein Fluidfluss zwischen der ersten Kammer und dem Fluidreservoir möglich ist. Mittels einer solchen Weiterbildung der Erfindung kann das Stellorgan im Störungszustand das Rotorblatt in die Fahnenstellung bewegen. Als Störungszustand wird hierbei ein Zustand beschrieben, der es notwendig macht den Rotor anzuhalten, da z. B. eine Wartung notwendig ist oder die Gefahr eines Schadens für den Rotor oder andere in der Nähe befindliche Gegenstände oder Personen besteht. Von dem Störungszustand zu unterscheiden ist der Betriebszustand, der den Normalzustand darstellt und der ein Anhalten des Rotors nicht erforderlich macht. Insbesondere der Freilaufzustand ist ein Betriebszustand. Der Freilaufzustand ermöglicht, dass das Rotorblatt von dem zugeordneten elektrischen Pitchmotor oder von anderen auf das Rotorblatt einwirkenden Kräften, wie z. B. Trägheitskräften, Gewichtskräften, Reibungskräften oder auf das Rotorblatt einwirkende von Wind- oder Fluidströmungen ausgehenden Kräften, bewegt werden kann, ohne dass der hydraulische Pitchantrieb einen nennenswerten Widerstand dieser Bewegung entgegensetzt. Das Stellorgan kann insbesondere als Hydraulikzylinder ausgebildet sein. Der Druckspeicher dient der Speicherung von unter Druck stehendem Hydraulikfluid und kann von der Motor-/Pumpenvorrichtung mit Hydraulikfluid aus dem Fluidreservoir geladen werden. Die Schaltventilanordnung kann im Störungszustand einen Fluidfluss aus dem Druckspeicher in die erste Kammer des Stellorgans einstellen, so dass das Stellorgan derart auf das Rotorblatt einwirkt, dass das Rotorblatt die Fahnenstellung einnimmt. Des Weiteren kann die Schaltventilanordnung im Freilaufzustand einen Fluidfluss zwischen der ersten Kammer und dem Fluidreservoir ermöglichen, so dass bei Rotationsbewegungen des Rotorblattes Hydraulikfluid je nach Richtung der Bewegung entweder aus der ersten Kammer in das Fluidreservoir gefördert wird oder Hydraulikfluid aus dem Fluidreservoir in die erste Kammer gesogen wird. Im Störungszustand ist ein Fluidfluss zwischen der ersten Kammer und dem Fluidreservoir nicht möglich, sondern lediglich ein Fluidfluss aus dem Druckspeicher in die erste Kammer.

Der hydraulische Pitchantrieb des erfindungsgemäßen elektrisch-hydraulischen Pitchantriebs ist insbesondere dazu ausgestaltet, den elektrischen Pitchmotor im Störungszustand zu unterstützen oder z. B. bei einem Ausfall des elektrischen Pitchmotors zu ersetzen. Hierbei wird die in dem Druckspeicher gespeicherte Energie dazu verwendet das Rotorblatt insbesondere in die Fahnenstellung zu drehen.

Eine vorteilhafte Ausgestaltung der Erfindung zeichnet sich dadurch aus, dass die Schaltventilanordnung ein Sicherheitsschaltventil und ein Betriebsschaltventil aufweist, wobei das Sicherheitsschaltventil in einer ersten Verbindungsleitung zwischen der ersten Kammer und dem Druckspeicher angeordnet ist und das Betriebsschaltventil in einer zweiten Verbindungsleitung zwischen der ersten Kammer und dem Fluidreservoir angeordnet ist, wobei das Sicherheitsschaltventil im Störungszustand geöffnet ist und im Betriebszustand geschlossen ist, wohingegen das Betriebsschaltventil sowohl im Störungszustand als auch im Bremszustand geschlossen ist und im Freilaufzustand geöffnet ist. Hierdurch wird neben dem Freilaufzustand der Bremszustand als ein weiterer Betriebszustand des erfindungsgemäßen elektrisch-hydraulischen Pitchantriebs ermöglicht. Im Bremszustand wird die Rotation des Rotorblattes dadurch verhindert, dass das Betriebsschaltventil und das Sicherheitsschaltventil geschlossen sind, wodurch Hydraulikfluid weder in die Kammer hinein gesogen noch aus der Kammer heraus gefördert werden kann. Aufgrund der Inkompressibilität der Hydraulikflüssigkeit wird hierdurch zumindest in einer der Rotationsrichtungen eine Rotation des Rotorblattes verhindert.

Ferner ist es vorteilhaft, wenn der elektrische Teil des erfindungsgemäßen elektrisch-hydraulischen Pitchantriebs wenigstens eine Bremsvorrichtung aufweist. Derartige Bremsvorrichtungen können z. B. an der Welle des elektrischen Pitchmotors, an einem zwischen dem elektrischen Pitchmotor und dem Zahnkranz angeordneten Getriebe oder direkt am Zahnkranz angreifen.

Gemäß einer besonders vorteilhaften Weiterbildung der Erfindung ist vorgesehen, dass die Schaltventilanordnung ein Mehrzweckschaltventil aufweist, wobei das Mehrzweckschaltventil im Störungszustand einen Fluidfluss zwischen der ersten Kammer und dem Druckspeicher ermöglicht und im Freilaufzustand einen Fluidfluss zwischen der ersten Kammer und dem Fluidreservoir ermöglicht. Im Freilaufzustand kann bei Rotationsbewegungen des Rotorblattes Hydraulikfluid je nach Richtung der Rotationsbewegung entweder aus der ersten Kammer in das Fluidreservoir gefördert werden oder Hydraulikfluid aus dem Fluidreservoir in die erste Kammer gesogen werden. D. h. die Bewegungen des Rotorblattes werden hierbei nicht oder nur unwesentlich gebremst. Im Störungszustand ist ein Fluidfluss zwischen der ersten Kammer und dem Fluidreservoir nicht möglich, sondern lediglich ein Fluidfluss aus dem Druckspeicher in die erste Kammer.

Bei einer bevorzugten Ausgestaltung der Erfindung ist vorgesehen, dass die Schaltventilanordnung ein Bremsschaltventil aufweist und das Stellorgan eine zweite Kammer aufweist, wobei das Bremsschaltventil im Bremszustand einen Fluidfluss aus den Kammern des Stellorgans oder in die Kammern des Stellorgans verhindert. Diese Ausgestaltung ermöglicht es durch Schließen des Bremsschaltventils einen Fluidfluss aus den Kammern des Stellorgans oder in die Kammern des Stellorgans zu verhindern. Insbesondere ist das Stellorgan derart ausgestaltet, dass das Rotorblatt in beide Rotationsrichtungen gegen eine der Kammern arbeitet. Dadurch, dass das in den Kammern eingeschlossene Hydraulikfluid im Wesentlichen inkompressibel ist, wird erreicht, dass im Bremszustand eine Rotation des Rotorblattes in beide Rotationsrichtungen unterbunden werden kann. Ein besonderer Vorteil dieser Ausgestaltung liegt darin, dass auf eine weitere Bremsvorrichtung innerhalb des elektrisch-hydraulischen Pitchantriebs verzichtet werden kann.

Gemäß einer weiteren bevorzugten Ausgestaltung der Erfindung ist vorgesehen, dass die Schaltventilanordnung derart ausgestaltet ist, dass im Störungszustand ein Fluidfluss von der zweiten Kammer in die erste Kammer möglich ist. Insbesondere vereinigt sich im Störungszustand der Fluidstrom aus dem Druckspeicher mit dem Fluidstrom aus der zweiten Kammer, bevor er in die erste Kammer strömt.

Darüber hinaus ist es vorteilhaft, wenn zwischen dem zweiten Anschluss der Motor-/Pumpenvorrichtung und dem Druckspeicher ein Rückschlagventil angeordnet ist.

Das Rückschlagventil verhindert, dass Hydraulikfluid aus dem Druckspeicher in die Motor-/Pumpenvorrichtung zurückströmt und diese möglicherweise beschädigt.

Gemäß einer weiteren bevorzugten Weiterbildung der Erfindung ist vorgesehen, dass zwischen dem Druckspeicher und der ersten Kammer eine Drossel angeordnet ist. Mittels dieser Drossel kann die Strömungsgeschwindigkeit des Hydraulikfluids aus dem Druckspeicher in die erste Kammer und somit die Rotationsgeschwindigkeit des Rotorblattes beeinflusst werden. Alternativ kann dies auch durch eine geeignete Wahl des Leitungsquerschnitts der verwendeten Leitungen erreicht werden.

Die zuvor hergeleitete und aufgezeigte Aufgabe ist ausgehend von der eingangs beschriebenen Wind- oder Wasserenergieanlage ferner dadurch gelöst, dass das eine oder wenigstens eines der mehreren Rotorblätter einen elektrisch-hydraulischen Pitchantrieb nach einem der Ansprüche 1 bis 8 aufweist.

Die zuvor hergeleitete und aufgezeigte Aufgabe ist ausgehend von dem eingangs beschriebenen Verfahren zum Betrieb eines elektrisch-hydraulischen Pitchantriebs ferner dadurch gelöst, dass das Rotorblatt einen hydraulischen Pitchantrieb aufweist, wobei die Kraft von dem hydraulischen Pitchantrieb auf das Rotorblatt mechanisch unabhängig von der Kraft von dem elektrischen Pitchmotor auf das Rotorblatt übertragen wird. Dies bedeutet, dass die von dem elektrischen Pitchmotor erzeugte Kraft mechanisch auf einem anderen Wege übertragen wird, als die von dem hydraulischen Pitchantrieb erzeugte Kraft. Wie bereits ausgeführt wird die Kraft von dem elektrischen Pitchmotor auf das Rotorblatt über ein Getriebe übertragen, welches ein Zahnrad antreibt. Das Zahnrad greift hierbei z. B. in einen an dem Blatt, insbesondere an der Innenseite der Blattwurzel, angeordneten Zahnkranz ein. Durch die voneinander unabhängige Kraftübertragung werden das Zahnrad, der Zahnkranz und gegebenenfalls das Getriebe geschont.

Gemäß einer vorteilhaften Weiterbildung der Erfindung ist vorgesehen, dass das Rotorblatt einen hydraulischen Pitchantrieb aufweist, wobei der hydraulische Pitchantrieb ein Stellorgan, einen Druckspeicher, eine Motor-/Pumpenvorrichtung, eine Schaltventilanordnung und ein Fluidreservoir aufweist, wobei das Stellorgan eine erste Kammer aufweist und das Rotorblatt durch das Stellorgan um seine Längsachse drehbar ist, die Motor-/Pumpenvorrichtung zum Pumpen von Fluid aus dem Fluidreservoir in den Druckspeicher mit einem ersten Anschluss an das Fluidreservoir angeschlossen ist und mit einem zweiten Anschluss an den Druckspeicher angeschlossen ist, wobei im Störungszustand durch die Schaltventilanordnung ein Fluidfluss aus dem Druckspeicher in die erste Kammer des Stellorgans eingestellt wird und ein Fluidfluss zwischen der ersten Kammer und dem Fluidreservoir unterbunden wird. Im Störungszustand wird durch die Schaltventilanordnung ein Fluidfluss aus dem geladenen Druckspeicher in die erste Kammer hergestellt. Das in dem Druckspeicher befindliche Hydraulikfluid strömt aufgrund des im Druckspeicher herrschenden höheren Druckes in die erste Kammer. Gleichzeitig wird ein Fluidfluss zwischen der ersten Kammer und dem Fluidreservoir unterbunden, damit das aus dem Druckspeicher in die erste Kammer strömende Hydraulikfluid nicht in das Fluidreservoir abfließt. Hierdurch füllt sich die erste Kammer mit Hydraulikfluid und erzeugt eine Kraft, die das Rotorblatt in die gewünschte Richtung, insbesondere in die Fahnenstellung, dreht.

Eine vorteilhafte Ausgestaltung der Erfindung zeichnet sich dadurch aus, dass die Schaltventilanordnung ein Sicherheitsschaltventil und ein Betriebsschaltventil aufweist, wobei das Sicherheitsschaltventil in einer ersten Verbindungsleitung zwischen der ersten Kammer und dem Druckspeicher angeordnet ist und das Betriebsschaltventil in einer zweiten Verbindungsleitung zwischen der ersten Kammer und dem Fluidreservoir angeordnet ist, wobei bei einem Übergang in den Störungszustand das Sicherheitsschaltventil geöffnet wird und das Betriebsschaltventil geschlossen wird. Hierdurch wird erreicht, dass im Störungszustand Hydraulikfluid aus dem Druckspeicher in die erste Kammer einströmt und kein Hydraulikfluid aus der ersten Kammer in das Fluidreservoir abfließen kann. Auf diese Weise ist sichergestellt, dass im Störungszustand der hydraulische Pitchantrieb das Rotorblatt in die gewünschte Richtung, insbesondere in die Fahnenstellung, dreht.

Gemäß einer besonders vorteilhaften Weiterbildung der Erfindung ist vorgesehen, dass die Schaltventilanordnung ein Sicherheitsschaltventil und ein Betriebsschaltventil aufweist, wobei das Sicherheitsschaltventil in einer ersten Verbindungsleitung zwischen der ersten Kammer und dem Druckspeicher angeordnet ist und das Betriebsschaltventil in einer zweiten Verbindungsleitung zwischen der ersten Kammer und dem Fluidreservoir angeordnet ist, wobei bei einem Übergang in den Bremszustand das Sicherheitsschaltventil geschlossen wird und das Betriebsschaltventil geschlossen wird. Hierdurch wird erreicht, das im Bremszustand weder Hydraulikfluid aus der ersten Kammer in das Fluidreservoir abfließen kann noch Hydraulikfluid aus dem Druckspeicher in die erste Kammer strömen kann. Auf diese Weise ist sichergestellt, dass das Rotorblatt, zumindest in einer der zwei möglichen Rotationsrichtungen, gebremst wird.

Bei einer bevorzugten Ausgestaltung der Erfindung ist vorgesehen, dass die Schaltventilanordnung ein Sicherheitsschaltventil und ein Betriebsschaltventil aufweist, wobei das Sicherheitsschaltventil in einer ersten Verbindungsleitung zwischen der ersten Kammer und dem Druckspeicher angeordnet ist und das Betriebsschaltventil in einer zweiten Verbindungsleitung zwischen der ersten Kammer und dem Fluidreservoir angeordnet ist, wobei bei einem Übergang in den Freilaufzustand das Sicherheitsschaltventil geschlossen wird und das Betriebsschaltventil geöffnet wird. Hierdurch wird erreicht, dass im Freilaufzustand je nach Rotationsrichtung des Rotorblattes Hydraulikfluid aus der ersten Kammer in das Fluidreservoir abfließen kann oder Hydraulikfluid aus dem Fluidreservoir in die erste Kammer gesogen werden kann. Auf diese Weise ist sichergestellt, dass das Rotorblatt im Wesentlichen ungebremst von dem hydraulischen Pitchantrieb um seine Längsachse rotieren kann.

Gemäß einer weiteren bevorzugten Ausgestaltung der Erfindung ist vorgesehen, dass die Schaltventilanordnung ein Mehrzweckschaltventil aufweist, wobei durch das Mehrzweckschaltventil im Störungszustand ein Fluidfluss zwischen der ersten Kammer und dem Druckspeicher ermöglicht wird und im Freilaufzustand einen Fluidfluss zwischen der ersten Kammer und dem Fluidreservoir ermöglicht wird. Insbesondere wird im Störungszustand durch das Mehrzweckschaltventil ein Fluidfluss zwischen der ersten Kammer und dem Fluidreservoir unterbunden, so dass kein Hydraulikfluid aus der ersten Kammer in das Fluidreservoir abfließen kann. Hierdurch wird im Störungszustand sichergestellt, dass Hydraulikfluid aus dem Druckspeicher in die erste Kammer strömen kann und somit der hydraulische Pitchantrieb das Rotorblatt in die gewünschte Richtung, insbesondere in die Fahnenstellung, dreht. Im Freilaufzustand wird durch das Mehrzweckschaltventil insbesondere ein Fluidfluss zwischen dem Druckspeicher und der ersten Kammer unterbunden, so dass kein Hydraulikfluid aus dem Druckspeicher in die erste Kammer strömen kann. Hierdurch wird im Freilaufzustand sichergestellt, dass das Rotorblatt im Wesentlichen von dem hydraulischen Pitchantrieb ungebremst um seine Längsachse rotieren kann.

Darüber hinaus ist es vorteilhaft, wenn die Schaltventilanordnung ein Bremsschaltventil aufweist und das Stellorgan eine zweite Kammer aufweist, wobei durch das Bremsschaltventil im Bremszustand ein Fluidfluss aus den Kammern des Stellorgans oder in die Kammern des Stellorgans verhindert wird. Insbesondere ist das Stellorgan derart ausgestaltet, dass das Rotorblatt in beide Rotationsrichtungen gegen eine der Kammern arbeitet. Dadurch, dass das in den Kammern eingeschlossene Hydraulikfluid im Wesentlichen inkompressibel ist, wird im Bremszustand eine Rotation des Rotorblattes in beide Rotationsrichtungen verhindert.

Gemäß einer weiteren bevorzugten Weiterbildung der Erfindung ist vorgesehen, dass die Schaltventilanordnung derart ausgestaltet ist, dass im Störungszustand ein Fluidfluss von der zweiten Kammer in die erste Kammer ermöglicht wird. Insbesondere ist die Schaltventilanordnung derart ausgestaltet, dass im Störungszustand der Fluidstrom aus dem Druckspeicher mit dem Fluidstrom aus der zweiten Kammer vereinigt wird, bevor sie gemeinsam in die erste Kammer strömen.

Im Einzelnen gibt es nun eine Vielzahl von Möglichkeiten, den erfindungsgemäßen elektrisch-hydraulischen Pitchantrieb auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen.

In der Zeichnung zeigt
Fig. 1 schematisch einen hydraulischen Pitchantrieb gemäß einem ersten Ausführungsbeispiel der Erfindung,
Fig. 2 schematisch einen hydraulischen Pitchantrieb gemäß einem zweiten Ausführungsbeispiel der Erfindung,
Fig. 3 schematisch einen hydraulischen Pitchantrieb gemäß einem dritten Ausführungsbeispiel der Erfindung,
Fig. 4 schematisch einen hydraulischen Pitchantrieb gemäß einem vierten Ausführungsbeispiel der Erfindung und
Fig. 5 schematisch einen Rotor mit drei Rotorblättern, wobei eines der Rotorblätter mit einem erfindungsgemäßen elektrisch-hydraulischen Pitchantrieb ausgestattet ist.

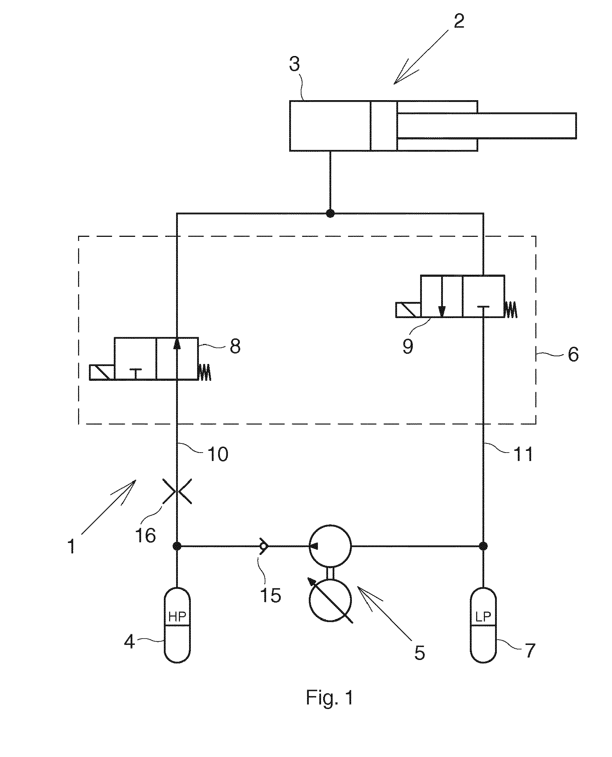

Fig. 1 zeigt einen hydraulischen Pitchantrieb 1 mit einem Stellorgan 2, wobei das Stellorgan 2 eine erste Kammer 3 aufweist. Ferner ist ein Druckspeicher 4 vorgesehen, der mit einer Motor-/Pumpenvorrichtung 5 verbunden ist. Zwischen dem Druckspeicher 4 und der ersten Kammer 3 des Stellorgans 2 ist eine Schaltventilanordnung 6 angeordnet. Über die Motor-/Pumpenvorrichtung 5 kann Hydraulikfluid aus einem Fluidreservoir 7 in den Druckspeicher 4 gepumpt werden. Die Schaltventilanordnung 6 weist ein Sicherheitsschaltventil 8 und ein Betriebsschaltventil 9 auf. Sowohl das Sicherheitsschaltventil 8 als auch das Betriebsschaltventil 9 sind elektrisch betätigbar und weisen jeweils eine Rückstellfeder auf. Das Sicherheitsschaltventil 8 ist in einer ersten Verbindungsleitung 10 zwischen dem Druckspeicher 4 und der ersten Kammer 3 angeordnet. Das Betriebsschaltventil 9 ist in einer zweiten Verbindungsleitung 11 zwischen dem Fluidreservoir 7 und der ersten Kammer 3 angeordnet. Zwischen dem Druckspeicher 4 und der Motor-/Pumpenvorrichtung 5 ist ein Rückschlagventil 15 vorgesehen. In der ersten Verbindungsleitung 10 zwischen dem Druckspeicher 4 und der ersten Kammer 3 ist eine Drossel 16 vorgesehen. Über die Drossel 16 kann die Strömungsgeschwindigkeit des Hydraulikfluids zwischen dem Druckspeicher 4 und der ersten Kammer 3 beeinflusst werden.

Die Motor-/Pumpenvorrichtung 5 weist eine Pumpe und einen Motor, bevorzugt einen Elektromotor, auf, der die Pumpe antreibt. Vorzugsweise ist die Motor-/Pumpenvorrichtung 5 derart ausgestaltet, dass sie lediglich in einer Richtung Hydraulikfluid fördern kann. Solange die Motor-/Pumpenvorrichtung 5 mit Energie, beispielsweise aus dem Netz, versorgt wird, wird der Druckspeicher 4 mit Hydraulikfluid aus dem Fluidreservoir 7 aufgeladen. Vorzugsweise ist eine Druckmesseinrichtung vorgesehen, die den Druck innerhalb des Druckspeichers 4 überwacht und bei Erreichen eines vorbestimmten Maximaldrucks die Motor-/Pumpenvorrichtung 5 abschaltet. Des Weiteren ist es vorteilhaft, wenn der Druckspeicher 4 ein Überdruckventil aufweist, welches bei Überschreiten eines vorbestimmten Maximaldrucks Hydraulikfluid aus dem Druckspeicher 4 ablässt.

Im Störungszustand wird das Betriebsschaltventil 9 geschlossen und das Sicherheitsschaltventil 8 geöffnet. Bei einem Ausfall des Netzes, mit dessen elektrischer Energie das Sicherheitsschaltventil 8 und das Betriebsschaltventil 9 betätigbar sind, erfolgt das Schließen des Betriebsschaltventils 9 und die Öffnung des Sicherheitsschaltventil 8 automatisch durch die jeweiligen Rückstellfedern. Hierauf strömt Hydraulikfluid aus dem unter Druck stehenden Druckspeicher 4 durch die erste Verbindungsleitung 10, die Drossel 16 und das Sicherheitsschaltventil 8 in die erste Kammer 3 des Stellorgans 2. Ein Abfließen von Hydraulikfluid in das Fluidreservoir 7 wird durch das geschlossene Betriebsschaltventil 9 verhindert. Infolge des in die erste Kammer 3 einströmenden Hydraulikfluids erzeugt das Stellorgan 3 eine Kraft, die auf ein in der Figur nicht dargestelltes Rotorblatt wirkt und das Rotorblatt in Richtung der gewünschten Rotationsrichtung beschleunigt. Vorzugsweise wird das Rotorblatt hierbei in die Fahnenstellung gedreht.

Im Freilaufzustand ist das Sicherheitsschaltventil 8 geschlossen und das Betriebsschaltventil 9 geöffnet. Folglich kann Hydraulikfluid sowohl aus dem Fluidreservoir 7 in die erste Kammer 3 gesogen werden, als auch aus der ersten Kammer 3 in das Fluidreservoir 7 gefördert werden. In diesem Zustand wird das nicht dargestellte Rotorblatt in seinen Rotationsbewegungen durch den hydraulischen Pitchantrieb 1 nicht oder nur unwesentlich gebremst.

Im Bremszustand sind sowohl das Sicherheitsschaltventil 8 als auch das Betriebsschaltventil 9 geschlossen. Dies bedeutet, dass Hydraulikfluid weder in die erste Kammer 3 hineinströmen kann noch aus der ersten Kammer 3 austreten kann. Hierdurch wird bewirkt, dass bei einer Rotation des nicht dargestellten Rotorblattes in der Rotationsrichtung, in der die erste Kammer 3 mit Druck beaufschlagt wird, die Rotation des Rotorblattes gebremst wird. Die Ursache hierfür ist der Gegendruck des in der ersten Kammer 3 eingesperrten Hydraulikfluids, vorausgesetzt dass das Hydraulikfluid im Wesentlichen inkompressibel ist.

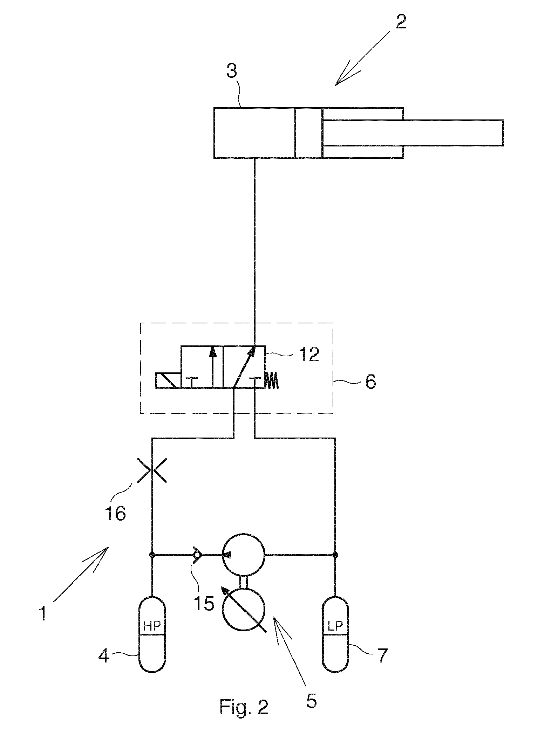

Das in der Fig. 2 dargestellte Ausführungsbeispiel der Erfindung unterscheidet sich von dem in der Fig. 1 dargestellten Ausführungsbeispiel der Erfindung dadurch, dass die Schaltventilanordnung 6 in der Fig.2 lediglich ein Mehrzweckschaltventil 12 aufweist. Dieses Mehrzweckschaltventil 12 ist als ein elektrisch betätigbares 3/2-Wegeventil ausgestaltet, welches eine Rückstellfeder aufweist. In Bezug auf die weiteren dargestellten Bauteile wird auf die Beschreibung der Fig. 1 verwiesen.

Im Freilaufzustand ermöglicht das Mehrzweckschaltventil 12 lediglich einen Fluidfluss zwischen der ersten Kammer 3 und dem Fluidreservoir 7. Ein Fluidfluss zwischen dem Druckspeicher 4 und der ersten Kammer 3 wird durch das Mehrzweckschaltventil 12 verhindert. In diesem Zustand wird das nicht dargestellte Rotorblatt in seinen Rotationsbewegungen durch den hydraulischen Pitchantrieb 1 nicht oder nur unwesentlich gebremst.

Im Störungszustand ermöglicht das Mehrzweckschaltventil 12 lediglich einen Fluidfluss zwischen der ersten Kammer 3 und dem Druckspeicher 4. Ein Fluidfluss zwischen dem Fluidreservoir 7 und der ersten Kammer 3 wird durch das Mehrzweckschaltventil 12 verhindert. Folglich strömt Hydraulikfluid aus dem unter Druck stehenden Druckspeicher 4 durch die Drossel 16 und das Mehrzweckschaltventil 12 in die erste Kammer 3 des Stellorgans 2. Infolge des in die erste Kammer 3 einströmenden Hydraulikfluids erzeugt das Stellorgan 3 eine Kraft, die auf ein in der Figur nicht dargestelltes Rotorblatt wirkt und das Rotorblatt in Richtung der gewünschten Rotationsrichtung beschleunigt. Vorzugsweise wird das Rotorblatt hierbei in die Fahnenstellung gedreht.

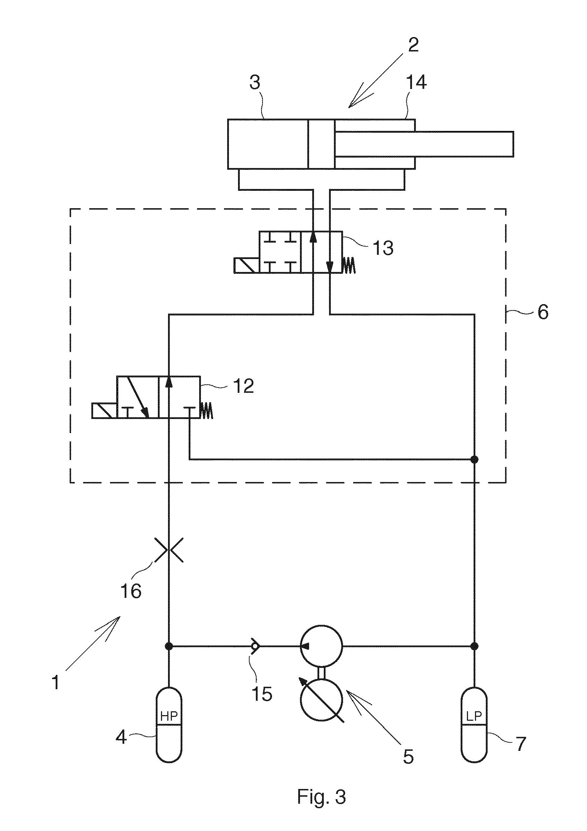

Das in der Fig. 3 dargestellte Ausführungsbeispiel der Erfindung entspricht dem der Fig. 2, ergänzt um ein Bremsschaltventil 13 und mit dem Unterschied, dass das Stellorgan 2 eine zweite Kammer 14 aufweist. Das Bremsschaltventil 13 ist Teil der Schaltventilanordnung 6 und ist direkt mit der ersten Kammer 3 und der zweiten Kammer 14 verbunden. Das Bremsschaltventil 13 ist als ein elektrisch betätigbares 4/2-Wegeventil ausgestaltet, welches eine Rückstellfeder aufweist.

Im Freilaufzustand ist das Bremsschaltventil 13 geöffnet und das Mehrzweckschaltventil 12 elektrisch betätigt, so dass ein Fluidfluss zwischen dem Fluidreservoir 7 und der ersten Kammer 3 möglich ist. Ebenso ist ein Fluidfluss zwischen der zweiten Kammer 14 und dem Fluidreservoir 7 möglich, da die zweite Kammer 14 und das Fluidreservoir 7 über das geöffnete Bremsschaltventil 13 miteinander verbunden sind. In diesem Zustand wird das nicht dargestellte Rotorblatt in seinen Rotationsbewegungen durch den hydraulischen Pitchantrieb 1 nicht oder nur unwesentlich gebremst.

Im Störungszustand ist das Bremsschaltventil 13 geöffnet und das Mehrzweckschaltventil 12 nicht elektrisch betätigt. Hierdurch ist ein Fluidfluss zwischen dem Druckspeicher 12 und der ersten Kammer 3 möglich. Ebenso ist, wie im Freilaufzustand, ein Fluidfluss zwischen der zweiten Kammer 14 und dem Fluidreservoir 7 möglich. Infolge des Druckunterschiedes zwischen dem Druckspeicher 4 und der ersten Kammer 3 strömt Hydraulikfluid aus dem Druckspeicher 4 in die erste Kammer 3. Gleichzeitig wird hierdurch Hydraulikfluid aus der zweiten Kammer 14 verdrängt und fließt in das Fluidreservoir 7 ab. Infolge des in die erste Kammer 3 einströmenden Hydraulikfluids erzeugt das Stellorgan 3 eine Kraft, die auf ein in der Figur nicht dargestelltes Rotorblatt wirkt und das Rotorblatt in Richtung der gewünschten Rotationsrichtung beschleunigt. Vorzugsweise wird das Rotorblatt hierbei in die Fahnenstellung gedreht.

Im Bremszustand ist das Bremsschaltventil 13 geschlossen. Das Mehrzweckschaltventil 12 kann im Bremszustand beide Stellungen einnehmen. Bevorzugt wird das Mehrzweckschaltventil 12 im Bremszustand elektrisch betätigt. Das geschlossene Bremsschaltventil 13 verhindert sowohl einen Fluidfluss aus den Kammern 3, 14 als auch in die Kammern 3, 14. Hierdurch wird bewirkt, dass bei einer Rotation des nicht dargestellten Rotorblattes stets eine der Kammern 3, 14 mit Druck beaufschlagt wird. Da das in den Kammern 3, 14 eingeschlossene Hydraulikfluid im Wesentlichen inkompressibel ist, bremst der Gegendruck des Hydraulikfluids die Rotation des Rotorblatts.

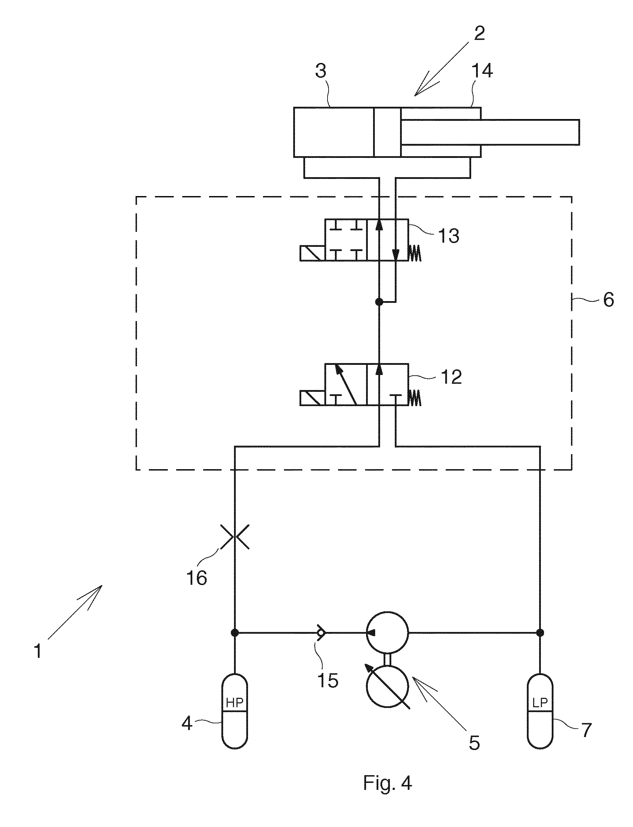

Die Fig. 4 zeigt ein weiteres bevorzugtes Ausführungsbeispiel der Erfindung, welches in weiten Teilen identisch mit dem der Fig. 3 ist. Der einzige Unterschied besteht in der Ausgestaltung der Verbindungsleitungen der Schaltventilanordnung 6. Die Schaltventilanordnung 6 ist derart ausgestaltet, dass im Störungszustand ein Fluidfluss zwischen der zweiten Kammer 14 und der ersten Kammer 3 möglich ist. Hierdurch wird erreicht, dass das im Störungszustand aus dem Druckspeicher 4 in die erste Kammer 3 strömende Hydraulikfluid sich mit einem aus der zweiten Kammer 14 austretenden Fluidstrom vereinigt und darauf in die erste Kammer 3 strömt. Eine derartige Ausgestaltung wird im Stand der Technik als Differentialschaltung bezeichnet.

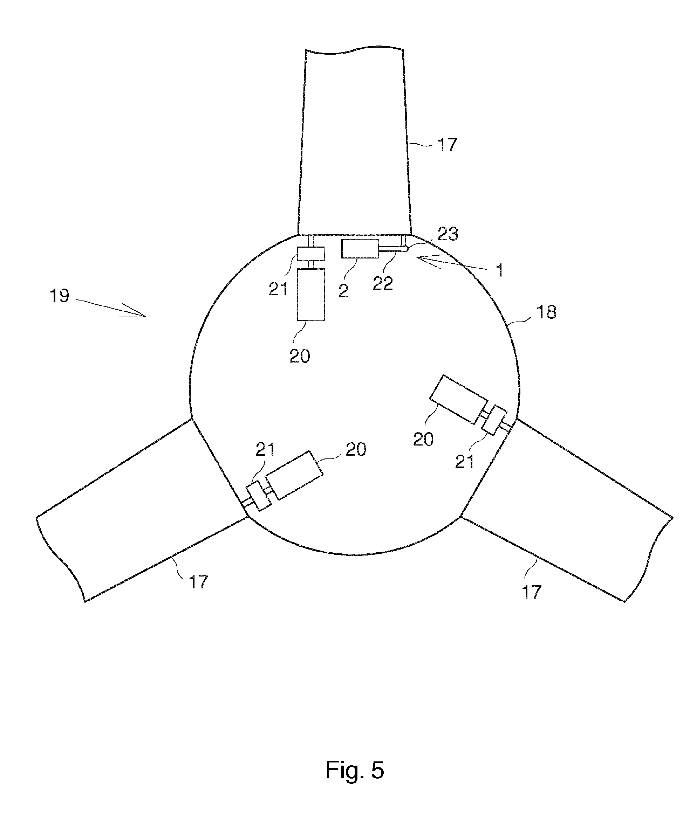

In Fig. 5 ist schematisch ein Rotor 19 mit drei Rotorblättern 17 dargestellt, wobei die Rotorblätter 17 an der Rotornabe 18 um ihre Längsachse drehbar angeordnet sind. Jedem Rotorblatt 17 ist ein elektrischer Pitchmotor 20 zugeordnet. Die elektrischen Pitchmotoren 20 treiben über Getriebe 21 die Rotorblätter 17 an. Die Kraftübertragung auf das jeweilige Rotorblatt 17 erfolgt insbesondere über ein nicht dargestelltes Zahnrad, das in einen am Rotorblatt 17 angeordneten ebenfalls nicht dargestellten Zahnkranz eingreift. In Fig. 5 ist ferner ein hydraulischer Pitchantrieb 1 gezeigt, der einem der Rotorblätter 17 zugeordnet ist und zusammen mit dem entsprechenden diesem Rotorblatt 17 zugeordneten elektrischen Pitchmotor 20 den erfindungsgemäßen elektrisch-hydraulischen Pitchantrieb bildet. Im Rahmen der Erfindung kann auch mehreren oder jedem Rotorblatt 17 eines Rotors 18 ein erfindungsgemäßer elektrisch-hydraulischer Pitchantrieb zugeordnet sein. Zur besseren Übersichtlichkeit ist in der Fig. 5 lediglich das Stellorgan 2 des hydraulischen Pitchantriebs 1 dargestellt. Das Stellorgan 2 ist als ein Hydraulikzylinder ausgebildet und weist eine Zylinderkolbenstange 22 auf. Die Zylinderkolbenstange 22 weist an ihrem freien Ende ein Drehgelenk 23 auf, welches mit dem Rotorblatt 17 verbunden ist. Die Kraftübertragung von dem Stellorgan 2 auf das Rotorblatt 17 erfolgt über die Bewegungen der Zylinderkolbenstange 22 und das Drehgelenk 23, welches die Bewegungen der Zylinderkolbenstange 22 in Rotationsbewegungen des Rotorblatts 17 umsetzt. Erfindungsgemäß erfolgt somit die Kraftübertragung von dem hydraulischen Pitchantrieb 1 mechanisch unabhängig von der Kraftübertragung von dem elektrischen Pitchmotor 20 auf das Rotorblatt 17.

### Bezugszeichenliste

- 1: hydraulischer Pitchantrieb
- 2: Stellorgan
- 3: erste Kammer
- 4: Druckspeicher
- 5: Motor-/Pumpenvorrichtung
- 6: Schaltventilanordnung
- 7: Fluidreservoir
- 8: Sicherheitsschaltventil
- 9: Betriebsschaltventil
- 10: erste Verbindungsleitung
- 11: zweite Verbindungsleitung
- 12: Mehrzweckschaltventil
- 13: Bremsschaltventil
- 14: zweite Kammer
- 15: Rückschlagventil
- 16: Drossel
- 17: Rotorblatt
- 18: Rotornabe
- 19: Rotor
- 20: elektrischer Pitchmotor
- 21: Getriebe
- 22: Zylinderkolbenstange
- 23: Drehgelenk

## Patentansprüche

1. Elektrisch-hydraulischer Pitchantrieb für ein Rotorblatt (17), wobei das Rotorblatt (17) an der Rotornabe (18) eines Rotors (19) angeordnet ist, das Rotorblatt (17) um seine Längsachse drehbar ist, dem Rotorblatt (17) wenigstens ein elektrischer Pitchmotor (20) zugeordnet ist und das Rotorblatt (17) durch den einen oder die mehreren zugeordneten elektrischen Pitchmotoren (20) um seine Längsachse drehbar ist,
**dadurch gekennzeichnet,**
**dass** das Rotorblatt (17) einen hydraulischen Pitchantrieb (1) aufweist, wobei die Kraft von dem hydraulischen Pitchantrieb (1) auf das Rotorblatt (17) mechanisch unabhängig von der Kraft von dem elektrischen Pitchmotor (20) auf das Rotorblatt (17) übertragbar ist.

2. Elektrisch-hydraulischer Pitchantrieb nach Anspruch 1, **dadurch gekennzeichnet, dass** der hydraulische Pitchantrieb (1) ein Stellorgan (2), einen Druckspeicher (4), eine Motor-/Pumpenvorrichtung (5), eine Schaltventilanordnung (6) und ein Fluidreservoir (7) aufweist, wobei das Stellorgan (2) eine erste Kammer (3) aufweist und das Rotorblatt (17) durch das Stellorgan (2) um seine Längsachse drehbar ist, die Motor-/Pumpenvorrichtung (5) zum Pumpen von Fluid aus dem Fluidreservoir (7) in den Druckspeicher (4) mit einem ersten Anschluss an das Fluidreservoir (7) angeschlossen ist und mit einem zweiten Anschluss an den Druckspeicher (4) angeschlossen ist, über die Schaltventilanordnung (6) im Störungszustand ein Fluidfluss aus dem Druckspeicher (4) in die erste Kammer (3) des Stellorgans (2) einstellbar ist und über die Schaltventilanordnung (6) im Freilaufzustand ein Fluidfluss zwischen der ersten Kammer (3) und dem Fluidreservoir (7) möglich ist.

3. Elektrisch-hydraulischer Pitchantrieb nach Anspruch 2, **dadurch gekennzeichnet, dass** die Schaltventilanordnung (6) ein Sicherheitsschaltventil (8) und ein Betriebsschaltventil (9) aufweist, wobei das Sicherheitsschaltventil (8) in einer ersten Verbindungsleitung (10) zwischen der ersten Kammer (3) und dem Druckspeicher (4) angeordnet ist und das Betriebsschaltventil (9) in einer zweiten Verbindungsleitung (11) zwischen der ersten Kammer (3) und dem Fluidreservoir angeordnet ist, wobei das Sicherheitsschaltventil (8) im Störungszustand geöffnet ist und im Betriebszustand geschlossen ist, wohingegen das Betriebsschaltventil (9) sowohl im Störungszustand als auch im Bremszustand geschlossen ist und im Freilaufzustand geöffnet ist.

4. Elektrisch-hydraulischer Pitchantrieb nach Anspruch 2, **dadurch gekennzeichnet, dass** die Schaltventilanordnung (6) ein Mehrzweckschaltventil (12) aufweist, wobei das Mehrzweckschaltventil (12) im Störungszustand einen Fluidfluss zwischen der ersten Kammer (3) und dem Druckspeicher (4) ermöglicht und im Freilaufzustand einen Fluidfluss zwischen der ersten Kammer (3) und dem Fluidreservoir (7) ermöglicht.

5. Elektrisch-hydraulischer Pitchantrieb nach Anspruch 4, **dadurch gekennzeichnet, dass** die Schaltventilanordnung (6) ein Bremsschaltventil (13) aufweist und das Stellorgan (2) eine zweite Kammer (14) aufweist, wobei das Bremsschaltventil (13) im Bremszustand einen Fluidfluss aus den Kammern (3, 14) des Stellorgans (2) oder in die Kammern (3, 14) des Stellorgans (2) verhindert.

6. Elektrisch-hydraulischer Pitchantrieb nach Anspruch 5, **dadurch gekennzeichnet, dass** die Schaltventilanordnung (6) derart ausgestaltet ist, dass im Störungszustand ein Fluidfluss von der zweiten Kammer (14) in die erste Kammer (3) möglich ist.

7. Elektrisch-hydraulischer Pitchantrieb nach einem der Ansprüche 2 bis 6, **dadurch gekennzeichnet, dass** zwischen dem zweiten Anschluss der Motor-/Pumpenvorrichtung (5) und dem Druckspeicher (4) ein Rückschlagventil (15) angeordnet ist.

8. Elektrisch-hydraulischer Pitchantrieb nach einem der Ansprüche 2 bis 7, **dadurch gekennzeichnet, dass** zwischen dem Druckspeicher (4) und der ersten Kammer (3) eine Drossel (16) angeordnet ist.

9. Wind- oder Wasserenergieanlage mit einem Rotor (19), wobei der Rotor (19) eine Rotornabe (18) und wenigstens ein Rotorblatt (17) aufweist, wobei das eine oder die mehreren Rotorblätter (17) drehbar um ihre jeweilige Längsachse an der Rotornabe (18) angeordnet sind,
**dadurch gekennzeichnet,**
**dass** das eine oder wenigstens eines der mehreren Rotorblätter (17) einen elektrisch-hydraulischen Pitchantrieb nach einem der Ansprüche 1 bis 8 aufweist.

10. Verfahren zum Betrieb eines elektrisch-hydraulischen Pitchantriebs für ein Rotorblatt (17), wobei das Rotorblatt (17) an der Rotornabe (18) eines Rotors (19) angeordnet ist, das Rotorblatt (17) um seine Längsachse drehbar ist, dem Rotorblatt (17) wenigstens ein elektrischer Pitchmotor (20) zugeordnet ist und das Rotorblatt (17) durch den einen oder die mehreren zugeordneten elektrischen Pitchmotoren (20) um seine Längsachse drehbar ist,
**dadurch gekennzeichnet,**
**dass** das Rotorblatt (17) einen hydraulischen Pitchantrieb (1) aufweist, wobei die Kraft von dem hydraulischen Pitchantrieb (1) auf das Rotorblatt (17) mechanisch unabhängig von der Kraft von dem elektrischen Pitchmotor (20) auf das Rotorblatt (17) übertragen wird.

11. Verfahren zum Betrieb eines elektrisch-hydraulischen Pitchantriebs nach Anspruch 10, **dadurch gekennzeichnet, dass** der hydraulische Pitchantrieb (1) ein Stellorgan (2), einen Druckspeicher (4), eine Motor-/Pumpenvorrichtung (5), eine Schaltventilanordnung (6) und ein Fluidreservoir (7) aufweist, wobei das Stellorgan (2) eine erste Kammer (3) aufweist und das Rotorblatt (17) durch das Stellorgan (2) um seine Längsachse drehbar ist, die Motor-/Pumpenvorrichtung (5) zum Pumpen von Fluid aus dem Fluidreservoir (7) in den Druckspeicher (4) mit einem ersten Anschluss an das Fluidreservoir (7) angeschlossen ist und mit einem zweiten Anschluss an den Druckspeicher (4) angeschlossen ist, wobei im Störungszustand durch die Schaltventilanordnung (6) ein Fluidfluss aus dem Druckspeicher (4) in die erste Kammer (3) des Stellorgans (2) eingestellt wird und ein Fluidfluss zwischen der ersten Kammer (3) und dem Fluidreservoir (7) unterbunden wird.

12. Verfahren zum Betrieb eines elektrisch-hydraulischen Pitchantriebs nach Anspruch 11, **dadurch gekennzeichnet, dass** die Schaltventilanordnung (6) ein Sicherheitsschaltventil (8) und ein Betriebsschaltventil (9) aufweist, wobei das Sicherheitsschaltventil (8) in einer ersten Verbindungsleitung (10) zwischen der ersten Kammer (3) und dem Druckspeicher (4) angeordnet ist und das Betriebsschaltventil (9) in einer zweiten Verbindungsleitung (11) zwischen der ersten Kammer (3) und dem Fluidreservoir (7) angeordnet ist, wobei bei einem Übergang in den Störungszustand das Sicherheitsschaltventil (8) geöffnet wird und das Betriebsschaltventil (9) geschlossen wird.

13. Verfahren zum Betrieb eines elektrisch-hydraulischen Pitchantriebs nach einem der Ansprüche 11 bis 12, **dadurch gekennzeichnet, dass** die Schaltventilanordnung (6) ein Sicherheitsschaltventil (8) und ein Betriebsschaltventil (9) aufweist, wobei das Sicherheitsschaltventil (8) in einer ersten Verbindungsleitung (10) zwischen der ersten Kammer (3) und dem Druckspeicher (4) angeordnet ist und das Betriebsschaltventil (9) in einer zweiten Verbindungsleitung (11) zwischen der ersten Kammer (3) und dem Fluidreservoir (7) angeordnet ist, wobei bei einem Übergang in den Bremszustand das Sicherheitsschaltventil (8) geschlossen wird und das Betriebsschaltventil (9) geschlossen wird.

14. Verfahren zum Betrieb eines elektrisch-hydraulischen Pitchantriebs nach einem der Ansprüche 11 bis 13, **dadurch gekennzeichnet, dass** die Schaltventilanordnung (6) ein Sicherheitsschaltventil (8) und ein Betriebsschaltventil (9) aufweist, wobei das Sicherheitsschaltventil (8) in einer ersten Verbindungsleitung (10) zwischen der ersten Kammer (3) und dem Druckspeicher (4) angeordnet ist und das Betriebsschaltventil (9) in einer zweiten Verbindungsleitung (11) zwischen der ersten Kammer (3) und dem Fluidreservoir (7) angeordnet ist, wobei bei einem Übergang in den Freilaufzustand das Sicherheitsschaltventil (8) geschlossen wird und das Betriebsschaltventil (9) geöffnet wird.

15. Verfahren zum Betrieb eines elektrisch-hydraulischen Pitchantriebs nach Anspruch 11, **dadurch gekennzeichnet, dass** die Schaltventilanordnung (6) ein Mehrzweckschaltventil (12) aufweist, wobei durch das Mehrzweckschaltventil (12) im Störungszustand ein Fluidfluss zwischen der ersten Kammer (3) und dem Druckspeicher (4) ermöglicht wird und im Freilaufzustand einen Fluidfluss zwischen der ersten Kammer (3) und dem Fluidreservoir (7) ermöglicht wird.

16. Verfahren zum Betrieb eines elektrisch-hydraulischen Pitchantriebs nach Anspruch 15, **dadurch gekennzeichnet, dass** die Schaltventilanordnung (6) ein Bremsschaltventil (13) aufweist und das Stellorgan (2) eine zweite Kammer (14) aufweist, wobei durch das Bremsschaltventil (13) im Bremszustand ein Fluidfluss aus den Kammern (3, 14) des Stellorgans (2) oder in die Kammern (3, 14) des Stellorgans (2) verhindert wird.

17. Verfahren zum Betrieb eines elektrisch-hydraulischen Pitchantriebs nach Anspruch 16, **dadurch gekennzeichnet, dass** die Schaltventilanordnung (6) derart ausgestaltet ist, dass im Störungszustand ein Fluidfluss von der zweiten Kammer (14) in die erste Kammer (3) ermöglicht wird.
